# EUROPÄISCHE PATENTSCHRIFT

(11) **EP 0 821 013 B1**
(45) Veröffentlichungstag und Bekanntmachung des Hinweises auf die Patenterteilung: **06.10.1999**
(21) Anmeldenummer: 97112045.6
(22) Anmeldetag: 15.07.1997
(51) Int. Cl.: C08F 14/06, C08F 2/42

(54) **Verfahren zur Polymerisation von Vinylchlorid**
Process for polymerising vinyl chloride
Procédé pour polymériser le chlorure de vinyle

(30) Priorität: 25.07.1996 DE 19629988
(43) Veröffentlichungstag der Anmeldung: 28.01.1998
(73) Patentinhaber: BASF AKTIENGESELLSCHAFT, 67056 Ludwigshafen (DE)
(72) Erfinder: Lynch, John, Dr., 67590 Monsheim (DE); Perner, Thomas, Dr., 50389 Wesseling (DE); Hahn, Susanne, Dr., 68165 Mannheim (DE); Lüddecke, Erik, Dr., 67112 Mutterstadt (DE)

(56) Entgegenhaltungen:
- DE-A- 2 335 854
- DATENBANK "CHEMICAL ABSTRACTS" (DATEN- ANBIETER: STN): Abs. 91: 92 539, Colombus, OH, USA; & JP-A-54 066 994 (KUREHA CHEM. IND. Co., Ltd) 29. Mai 1979 XP002044321
- DATENBANK "CHEMICAL ABSTRACTS" (DATEN- ANBIETER: STN): Abs. 103:161374, Colombus, OH, USA; & JP-A-60 112 847 (ASAHI CHEM. IND. Co., Ltd) 19. Juni 1985 XP002044322

## Beschreibung

Gegenstand der vorliegenden Erfindung ist ein Verfahren zur Polymerisation von Vinylchlorid bei einer Temperatur zwischen 20 und 100°C und einem Druck von 5 bis 30 bar.

Weiterhin ist Gegenstand der vorliegenden Erfindung die Verwendung von Derivaten des Chromans zum Abbruch der Polymerisation von Vinylchlorid.

Bei der Polymerisation von Vinylchlorid wird im allgemeinen die Polymerisation bei einem Monomerenumsatz von ca. 70 bis 90 % abgebrochen, da auf diese Weise ein Polyvinylchlorid mit besseren anwendungstechnischen Eigenschaften erhalten wird. Üblicherweise werden zum Abbruch der Polymerisation Stopper wie Stickoxide, Zinn(II)-Salze, Thiosemicarbazone, Phenol, alkylierte Toluole, Hydrochinonmonomethylether, Benzochinon, p-Phenylendiamin oder Diphenylamin eingesetzt (s. z.B. G.W. Becker, D. Braun (Hrsg.), Kunststoff Handbuch, Hanser Verlag, München, Wien 1986, Band 2/1, S. 77). Da diese Verbindungen kaum wasserlöslich sind, werden sie im allgemeinen als methanolische Lösung dem Polymerisationsgemisch zugesetzt.

Der Nachteil der bisher verwendeten Stopper liegt einerseits in der geringen Wasserlöslichkeit, so daß mit dem Stopper spürbare Mengen toxikologisch bedenklicher organischer Lösungsmittel, meist Methanol, in das Polymerisationsgemisch eingebracht werden. Andererseits sind die bisher eingesetzten Stopper selbst toxikologisch bedenklich, so daß ihr Einsatz besonders für PVC, welches zu Verpackungen oder Folien für Nahrungsmittel verarbeitet wird, zu lebensmittelrechtlichen Problemen führt.

Die Aufgabe der vorliegenden Erfindung bestand daher in der Entwicklung eines Polymerisationsverfahrens für Vinylchlorid, bei dem der Abbruch der Polymerisation durch toxikologisch unbedenkliche und in kleinen Konzentrationen wirksame Verbindungen bewirkt wird.

Demgemäß wurde ein Verfahren zur Polymerisation von Vinylchlorid bei einer Temperatur zwischen 20 und 100°C und einem Druck von 5 bis 30 bar gefunden, welches dadurch gekennzeichnet ist, daß zum Abbruch der Polymerisation Derivate des Chromans eingesetzt werden.

Weiterhin wurde die Verwendung von Derivaten des Chromans zum Abbruch der Polymerisation von Vinylchlorid gefunden.

Zum Abbruch der Polymerisation können unterschiedliche Derivate des Chromans eingesetzt werden, wie sie beispielsweise auch zur antioxidativen Stabilisierung von Kunststoffen zum Einsatz kommen. Vorzugsweise werden Chromanderivate der allgemeinen Formel I 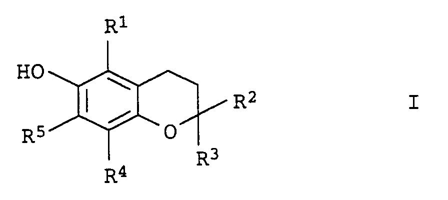 eingesetzt, in denen
- R¹: Wasserstoff oder einen aliphatischen oder aromatischen Rest mit bis 1 bis 20 C-Atomen,
- R²: einen C-organischen Rest mit 1 bis 30 C-Atomen und
- R³,R⁴,R⁵: Wasserstoff oder C₁-C₄-Alkyl
bedeuten.

Als Reste R¹ kommen neben Wasserstoff beispielsweise C₁-C₂₀-Alkylreste wie Methyl, Ethyl, Isopropyl, n-Propyl, n-Butyl, Isobutyl, sec.-Butyl, tert.-Butyl sowie die verschiedenen Isomere von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl in Betracht. Diese Alkylgruppen können auch durch Sauerstoff in Etherfunktion oder durch -CO-O-Gruppen unterbrochen sein, wobei im letzteren Fall als Grundkette dann nur die um die entsprechende Anzahl C-Atome verkürzten Alkylreste in Betracht kommen.

Bevorzugte Reste R¹ sind solche mit einer Struktur -CH₂-R⁶, wobei als R⁶ die folgenden Reste in Betracht kommen:
- die Phenyl- und die Phenoxygruppe sowie daneben die 1- und 2-Naphthylgruppe, die 1- und 2-Naphthoxygruppe und die 5,6,7,8-Tetrahydronaphthalin-1-yl- und 2-yl-gruppe, wobei diese Gruppen einen oder mehrere der folgenden Substituenten tragen können:
   C_{1 -} C₁₂-Alkylgruppen wie Methyl, Ethyl, Propyl, Isopropyl, Butyl, Isobutyl, sec-Butyl, tert.-Butyl, Pentyl, sec-Pentyl, tert.-Pentyl, Neopentyl, Hexyl, Methylpentyl, Heptyl, Octyl, 2-Ethylhexy, Nonyl, Decyl, Dodecyl, die entsprechenden C₁ - C₁₂-Alkoxygruppen, Hydroxy, Amino, Methylamino, Ethylamino, Propylamino, Isopropylamino, Butylamino, Dimethylamino, Diethylamino, Dipropylamino, Diisopropylamino und Dibutylamino, wobei die aromatischen Ringe auch mit unterschiedlichen Resten substituiert sein können und die Gesamtzahl der C-Atome in den Aryl- und Aryloxyresten R⁶ 6 bis 19 beträgt;
- C₁ - C₁₉-Alkoxygruppen wie Methoxy, Ethoxy, Propoxy, Isopropoxy, Butoxy, Isobutoxy, sec-Butoxy, tert.-Butoxy, Pentoxy, sec.-Pentoxy, tert.-Pentoxy, Neopentoxy, Hexoxy, Methylpentoxy, Heptoxy, Octoxy, 2-Ethylhexoxy, Nonoxy, Decoxy oder Dodecoxy;
- CN, -COOH oder -CONH₂.

Als Reste R² kommen beispielsweise Alkylreste mit 1 bis 30 C-Atomen in Betracht, vor allem längerkettige Alkylreste wie Octyl, Nonyl, Decyl, Dodecyl, Tridecyl, Tetradecyl, Hexadecyl, Octadecyl oder Eicosyl. Diese Reste können geradkettig oder verzweigt sein. Ein besonders bevorzugter Rest ist der Phytylrest, wie er auch im α-Tocopherol enthalten ist:

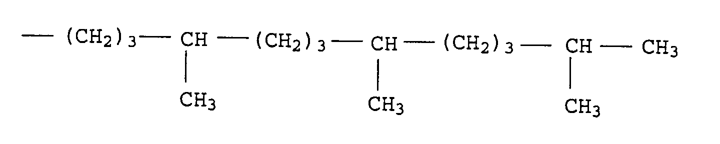

Weiterhin kommen als Reste R² Alkylreste in Betracht, die durch Sauerstoffatome in Etherfunktion, Schwefelatome in Thio-etherfunktion oder nicht benachbarte Imino-, Methylimino-, Ethylimino-, Propylimino- oder Butyliminogruppen unterbrochen sind. Besonders bevorzugt sind unter diesen Resten die Reste -(CH₂CH₂O)₃-CH₂-CH₃, -(CH₂CH₂O)₄-CH₂-CH₃, -(CH₂CH₂O)₅-CH₂CH₃ und -(CH₂CH₂O)₆-CH₂CH₃ sowie die Thioether, in denen R² für einen Rest der Formel

―CH₂―CH₂―S―R⁷

steht, wobei R⁷ einen C₁-C₂₈-Alkylrest bedeutet, dessen Kohlenstoffkette durch Sauerstoffatome in Etherfunktion oder durch nichtbenachbarte Imino- oder C₁-C₄-Alkyliminogruppen unterbrochen sein kann. Als Reste R⁷ kommen vor allem die für R² genannten Reste in Betracht. Chromanderivate mit derartigen Seitenketten sind beispielsweise aus der DE-A 44 05 670 bekannt.

Weiter bevorzugte Reste R² sind substituierte Benzylreste und darunter besonders hydroxysubstituierte Benzylreste der allgemeinen Formel 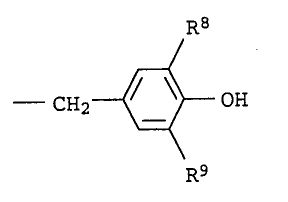 in denen R⁸ und R⁹ C₁-C₈-Alkylgruppen wie Methyl, Ethyl, Propyl, Isopropyl, Butyl, Isobutyl, sec-Butyl, tert.-Butyl, Pentyl, sec-Pentyl, tert.-Pentyl, Neopentyl, Hexyl, Methylpentyl, Heptyl, Octyl oder 2-Ethylhexyl bedeuten, wobei tert.-Butyl besonders bevorzugt ist.

Chromanderivate mit derartigen Resten R² sind beispielsweise aus der älteren deutschen Patentanmeldung 19 542 852.8 bekannt.

Bevorzugte Reste R² sind weiterhin solche der allgemeinen Formel

―(CH₂)ₘ―Xₙ―CO―Yᵣ―R¹⁰

in welcher die Variablen die folgende Bedeutung haben:
- X,Y: O, NH, S
- R¹⁰: C₁- bis C₂₀-Alkyl oder -Alkenyl
- m: 0, 1, 2 oder 3 und
- n,r: 0 oder 1.

Chromanderivate mit solchen Resten R² sind beispielsweise in EP-A-36 169 beschrieben.

Als Reste R³, R⁴ und R⁵ kommen z.B. die obengenannten C₁-C₄-Alkylreste in Betracht, vorzugsweise bedeuten diese Variablen Wasserstoff oder Methyl, besonders bevorzugt Methyl.

Die Herstellung der verschiedenen Chromanderivate ist z.B. in EP-A-36 169, in der älteren deutschen Patentanmeldung 19 542 852.8 sowie in P. Schudel et al. in "The Vitamins", ed. W.H. Sebrell, jr & R.S. Harris, Acad. Press, New York 1972, Vol. V, S. 168-218 beschrieben.

Ein besonders bevorzugtes Derivat des Chromans ist das natürlich vorkommende α-Tocopherol.

Zum Abbruch der Polymerisation werden die Chromanderivate vorzugsweise in einer Endkonzentration von 0,001 bis 0,1 Gew.-%, besonders bevorzugt von 0,005 bis 0,05 Gew.-%, jeweils bezogen auf die Gesamtmasse des Polymerisationsgemisches, zugegeben. Die Zugabe erfolgt vorzugsweise als Lösung in einem mit Wasser mischbaren Lösungsmittel. Als geeignet hat sich beispielsweise Methanol erwiesen.

Abgesehen von der Abbruchreaktion führt man die Polymerisation des Vinylchlorids in an sich bekannter Art und Weise, z.B. als Emulsions-, Suspensions- oder Massepolymerisation, bevorzugt als Suspensionspolymerisation, durch, wobei die Polymerisation des Vinylchlorids auch in Gegenwart von Emulsionspolymerisaten wie ein- oder mehrstufig hergestellten Polymeren auf Acrylatbasis (siehe beispielsweise DE-A 21 62 615, DE-B 20 13 020, DE-A 2 222 867, EP-A 222 127, EP-B 496 121) durchgeführt werden kann.

Bei den Monomeren handelt es sich insbesondere um Vinylchlorid oder Mischungen von Vinylchlorid und anderen Monomeren (Comonomere) mit mindestens 80 Gew.-% Vinylchlorid. Als Comonomere des Vinylchlorids kommen insbesondere Vinylester, z.B. Vinylacetat, Vinylpropionat u.a., Vinylether wie Vinylmethylether, Vinylethylether, Vinylisobutylether u.a., C₁-C₁₈-Alkylester der Acrylsäure wie Butylacrylat und 2-Ethylhexylacrylat sowie Dialkylmaleate wie Dibutylmaleat in Betracht.

Im Falle der Suspensionspolymerisation können die bei der Herstellung von Polyvinylchlorid üblichen Schutzkolloide eingesetzt werden, wie teilverseifte Polyvinylalkohole oder Celluloseether wie Methyl-, Methylhydroxyethyl- und Methylhydroxypropylcellulose. Polyvinylalkohole und Celluloseether können auch in Kombination eingesetzt werden.

Als monomerlösliche Initiatoren kommen bei der Suspensionspolymerisation übliche Peroxide, Perester, Percarbonate und Azoverbindungen in Betracht, beispielsweise Dilauroylperoxid, Dibenzoylperoxid, tert.-Butylperneodecanoat, tert.-Butylperpivalat, tert.-Butyl-2-ethylhexanoat, Trimethylpentylperneodecanoat, Diisopropylperoxidicarbonat, Di-n-butylperoxidicarbonat, Di-2-ethylhexylperoxidicarbonat, Dicyclohexylperoxidicarbonat.

Vor, während oder nach der Suspensionspolymerisation kann der pH-Wert durch Zugabe von Puffersalzen wie Natriumphosphat, Natriumpolyphosphat oder Natriumhydrogencarbonat eingestellt werden.

Die Polymerisationstemperatur richtet sich nach dem gewünschten Molekulargewicht bzw. K-Wert des Produktes und liegt zwischen 20 und 100°C, vorzugsweise zwischen 35 und 80°C, für die meisten Produkte zwischen 45 und 70°C. Die Polymerisation wird bei einem Umsatz von 70 bis 95 %, bevorzugt 80 bis 90 %, abgebrochen.

Die Polymerisation wird bei einem Druck von 5 bis 30 bar durchgeführt, vorzugsweise bei 8 bis 20 bar, wobei der Druck im allgemeinen durch den Dampfdruck des Vinylchlorids bei der gewünschten Polymerisationstemperatur vorgegeben wird.

Die im erfindungsgemäßen Polymerisationsverfahren eingesetzten Chromanderivate zeichnen sich durch gute Wirksamkeit als Polymerisationsstopper aus und sind zu einem großen Teil toxikologisch unbedenklich.

Die folgenden Beispiele erläutern die Erfindung.

### Beispiele

### Beispiele 1 bis 3

### Polymerisation von Vinylchlorid und Abbruch mit α-Tocopherol

Ein 3-l-Stahlautoklav wurde mit folgenden Rezepturbestandteilen beladen:
VE-Wasser (1300 g)
Polvinylalkohol mit Verseifungsgrad 88 % (8,75 g einer 4 gew.-%igen Lösung)
Polyvinylalkohol mit Verseifungsgrad 47 % (0,7 g einer 40 gew.-%igen Lösung
Hydroxypropylmethylcellulose (11,67 g einer 3%igen Lösung, Methoxyanteil 28-30, Hydroxypropylanteil 7-12 % der modifizierbaren Hydroxygruppen)
t-Butylperneodecanoat 95 % (0,52 g)
Natriumtripolyphosphat (0,35 g)

Der Autoklav wurde verschlossen und, nachdem die Dichtheit mit Stickstoff geprüft wurde, evakuiert. Vinylchlorid (700 g) wurde eingeleitet und der Autoklav auf 55°C aufgeheizt. Sobald der Druck im Autoklaven sich um 1 bar reduziert hatte, wurde der Stopper dazugepreßt. Nach 2 h wurde der Autoklav abgekühlt und entspannt.

In den nichterfindungsgemäßen Vergleichsbeispielen V1 bis V4 wurden handelsübliche Stopper eingesetzt bzw. auf den Abbruch verzichtet. Die Ergebnisse sind in der folgenden Tabelle aufgeführt.

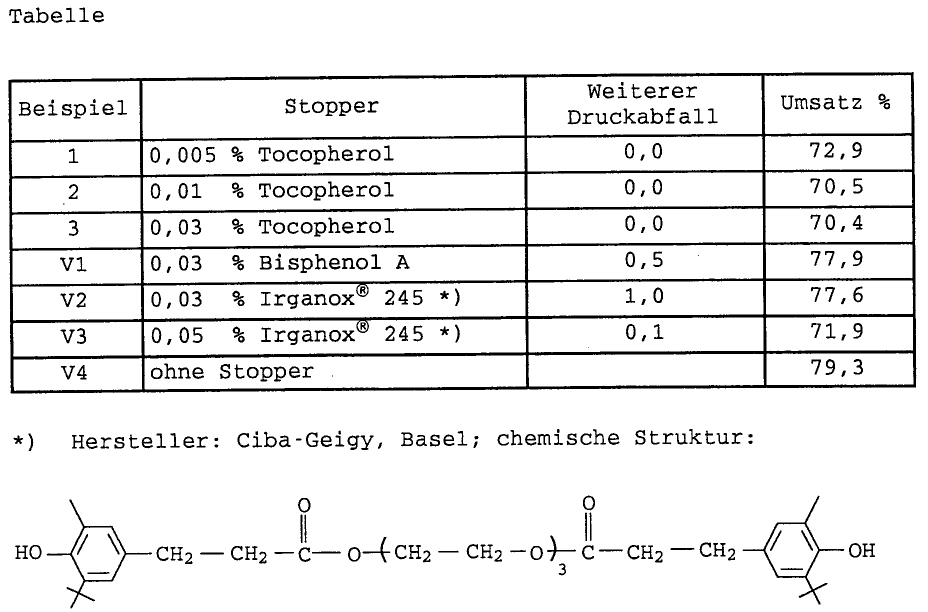

Der Vergleichsversuch zeigt die Überlegenheit von α-Tocopherol gegenüber herkömmlichen Abbruchreagenzien beim Abbruch der Polymerisation von Vinylchlorid.

## Patentansprüche

1. Verfahren zur Polymerisation von Vinylchlorid, gegebenenfalls zusammen mit bis zu 20 Gew.-% an Comonomeren, bei einer Temperatur zwischen 20 und 100°C und einem Druck von 5 bis 30 bar, dadurch gekennzeichnet, daß zum Abbruch der Polymerisation bei einem Umsatz von 70 bis 95 % Derivate des Chromans eingesetzt werden.

2. Verfahren nach Anspruch 1, dadurch gekennzeichnet, daß als Derivate des Chromans Verbindungen der allgemeinen Formel I 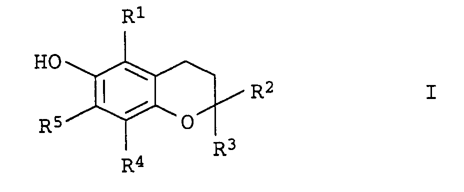 eingesetzt werden, in denen
R¹ Wasserstoff oder einen aliphatischen oder aromatischen Rest mit bis 1 bis 20 C-Atomen,
R² einen C-organischen Rest mit 1 bis 30 C-Atomen und
R³,R⁴,R⁵ Wasserstoff oder C₁-C₄-Alkyl
bedeuten.

3. Verfahren nach Anspruch 1, dadurch gekennzeichnet, daß als Derivat des Chromans α-Tocopherol eingesetzt wird.

4. Verfahren nach Anspruch 1, dadurch gekennzeichnet, daß die Polymerisation als Suspensionspolymerisation durchgeführt wird.

5. Verwendung von Derivaten des Chromans gemäß Anspruch 1 zum Abbruch der Polymerisation von Vinylchlorid.

6. Verwendung von Verbindungen der allgemeinen Formel I nach Anspruch 5 zum Abbruch der Polymerisation von Vinylchlorid.

7. Verwendung von α-Tocopherol nach Anspruch 5 zum Abbruch der Polymerisation von Vinylchlorid.

## Claims

1. A process for polymerizing vinyl chloride, optionally together with up to 20 % by weight of comonomers, at from 20 to 100°C under from 5 to 30 bar, wherein chroman derivatives are employed to stop the polymerization at a conversion of from 70 to 95 %.

2. A process as claimed in claim 1, wherein the chroman derivatives employed are compounds of the general formula I 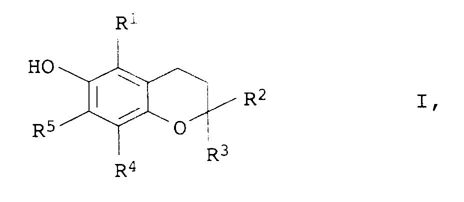 where
R¹ is hydrogen or an aliphatic or aromatic radical having 1 to 20 carbon atoms,
R² is a C-organic radical having 1 to 30 carbon atoms and
R³,R⁴,R⁵ are hydrogen or C₁-C₄-alkyl.

3. A process as claimed in claim 1, wherein the chroman derivative employed is α-tocopherol.

4. A process as claimed in claim 1, wherein the polymerization is carried out as suspension polymerization.

5. The use of chroman derivatives as set forth in claim 1 for stopping the polymerization of vinyl chloride.

6. The use of compounds of the general formula I as claimed in claim 5 for stopping the polymerization of vinyl chloride.

7. The use of α-tocopherol as claimed in claim 5 for stopping the polymerization of vinyl chloride.

## Revendications

1. Procédé pour la polymérisation du chlorure de vinyle, le cas échéant de manière conjointe avec des comonomères jusqu'à concurrence de 20% en poids, à une température entre 20 et 100°C et sous une pression de 5 à 30 bar, caractérisé en ce qu'on met en oeuvre, pour interrompre la polymérisation à une conversion à concurrence de 70 à 95%, des dérivés du chromane.

2. Procédé selon la revendication 1, caractérisé en ce qu'on met en oeuvre, à titre de dérivés du chromane, des composés répondant à la formule générale 1 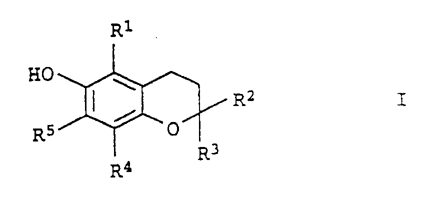 dans laquelle
R¹ représente un atome d'hydrogène ou un radical aliphatique ou aromatique contenant de 1 à 20 atomes de carbone,
R² représente un radical organique carboné contenant de 1 à 30 atomes de carbone, et
R³, R⁴, R⁵ représentent un atome d'hydrogène ou un groupe alkyle en c₁-c₄.

3. Procédé selon la revendication 1, caractérisé en ce qu'on met en oeuvre, à titre de dérivé du chromane, l'α-tocophérol.

4. Procédé selon la revendication 1, caractérisé en ce qu'on effectue la polymérisation sous la forme d'une polymérisation en suspension.

5. Utilisation de dérivés du chromane selon la revendication 1 pour interrompre la polymérisation du chlorure de vinyle.

6. Utilisation de composés répondant à la formule générale I selon la revendication 5 pour interrompre la polymérisation du chlorure de vinyle.

7. Utilisation de l'α-tocophérol selon la revendication 5 pour interrompre la polymérisation du chlorure de vinyle.
